# EUROPÄISCHE PATENTANMELDUNG

(11) **EP 2 554 885 A2**
(43) Veröffentlichungstag der Anmeldung: **06.02.2013**
(21) Anmeldenummer: 12173970.0
(22) Anmeldetag: 28.06.2012
(51) Int. Cl.: F16L 5/04, F16L 57/04, F16L 59/14, F16L 59/02, F16L 59/10

(54) **Passives Brandschutzsystem für Rohrleitungen und Verfahren dafür**

(30) Priorität: 03.08.2011 DE 102011080329
(71) Anmelder: HILTI Aktiengesellschaft, 9494 Schaan (LI)
(72) Erfinder: Münzenberger, Herbert, 65191 Wiesbaden (DE)

(57) **Zusammenfassung**

Es wird eine Bandage (4) zur Verlängerung der Zeitspanne in der ein Leitungsstrang, wie beispielsweise eine Rohrleitung (1), in einer Brandschutzinstallation unterhalb einer kritischen Temperatur bleibt, beschrieben, wobei die Bandage (4) ein Bindemittel, endotherm zersetzbare Füllstoffe und gegebenenfalls weitere Füllstoffe enthält. Ferner wird ein Verfahren zur Verlängerung der Zeitspanne in der ein Leitungsstrang, wie beispielsweise eine Rohrleitung (1), in einer Brandschutzinstallation unterhalb einer kritischen Temperatur bleibt, beschrieben, bei dem unmittelbar im Anschluss an die Abschottung (3) einer Durchführungsöffnung in einer Brandschutzinstallation ein Leitungsstrang bei Wanddurchführungen beidseitig und bei Deckendurchführungen oberhalb der Durchführöffnung mit der Bandage umwickelt wird.

## Beschreibung

Die vorliegende Erfindung betrifft das Gebiet des Brandschutzes, insbesondere ein passives Brandschutzsystem für Leitungsstränge, insbesondere für Rohrleitungen aus Metall oder metallhaltigen Materialien, durch eine Vorrichtung mittels der Wärme von der feuerabgewandten Seite eines Bauteils von den Rohrleitungen abgeführt wird, um so die Zeitspanne zu verlängern, innerhalb der die Temperatur der Rohrleitungen in der Brandschutzinstallation unterhalb einer kritischen Temperatur bleibt, d.h. die Temperatur am Messpunkt nicht um 180K über die Anfangstemperatur, d.h. die Raum- bzw. Umgebungstemperatur gestiegen ist.

Zur Durchführung von Leitungssträngen, wie z. B. Kabel oder Rohrleitungen, durch Bauteile, wie Wände, Decken und dergleichen, werden in Bauteilen Durchbrüche vorgesehen. Bei speziellen Gebäuden, wie öffentliche Gebäude, Krankenhäuser, Schulen und dergleichen, ist in vielen Ländern vorgeschrieben, sogenannte Brandschutzbereiche einzurichten. Hierdurch soll verhindert werden, dass sich im Brandfalle das Feuer und die dadurch entstandenen Rauchgase schnell in dem gesamten Gebäude ausbreiten. Daher müssen die Durchbrüche gegen die Ausbreitung von Feuer oder Rauchgas durch den Durchbruch brandsicher und rauchgasdicht verschlossen werden. Es sind verschiedene Vorrichtungen insbesondere zum brandsicheren und rauchgasdichten Durchführen eines Leitungsstranges durch einen in einem Bauteil ausgebildeten Durchbruch mit einem elastischen Dichtkörper bekannt, der zumindest eine Durchführöffnung aufweist.

Ein Feuer kann sich dadurch ausbreiten, dass die Flammen auf einen anderen Raum oder ein anderes Stockwerk überschlagen. Aber auch wenn keine Flammen überschlagen, kann in einem Raum Feuer ausbrechen und zwar dann, wenn die Hitze auf der feuerabgewandten Seite der Wand so groß wird, dass sich brennbare Materialien selbst entzünden. Insbesondere Rohrleitungen aus Materialien, welche Wärme gut leiten, wie Stahl- oder Metallrohre, stellen hier ein Problem dar. Diese erhitzen sich durch den Brand auf der einen Seite des Bauteils und leiten die Wärme trotz gegebenenfalls vorhandener Brandschutzvorrichtungen, wie Brandschutzschotts, durch das Bauteil, so dass sich nach kurzer Zeit die Rohrleitung auf der feuerabgewandeten Seite des Bauteils derart erhitzt, dass der Flammpunkt der angrenzenden Materialien, wie Tapeten, Vorhänge und ähnliches, erreicht werden kann. Ist dies der Fall, kann es zu einer Entzündung und somit zu einem Feuer auf der feuerabgewandten Seite kommen.

Insbesondere in den USA wird für Brandschutzanwendungen neben den auch in Europa üblichen Normen, wie die Feuerwiderstandsdauer eines Bauteils oder einer Abschottung, immer häufiger zusätzlich die Einhaltung sogenannter T-Rating-Limits vorgeschrieben. Brandschutzsysteme werden in den USA nach ASTM E814 (UL1479) getestet wobei zwei Bemessungsgrößen (Ratings) getestet werden, das sogenannte F-und T-Rating. Das F-Rating gibt die minimale Zeitspanne an, bei der eine Brandschutzinstallation getestet wurde und aufgezeigt werden konnte, dass eine Feuerausbreitung verhindert wurde. Das T-Rating gibt die Zeitspanne an, innerhalb der die Temperatur eines Messpunktes auf einer Installation auf der feuerabgewandeten Seite einer Wand- oder Deckendurchführung um 180K, gegenüber der Anfangstemperatur ansteigt. Dies soll sicher stellen, dass die Temperatur auf der feuerabgewandten Seite den Flammpunkt keines der auf dieser Seite der Wand befindlichen Materialien erreicht, so dass eine Selbstentzündung aufgrund erhöhter Temperatur verhindert wird.

Die zur Abschottung der Durchführungen von nichtmetallischen abquetschbaren Leitungssträngen verwendeten Dichtkörper, Massen oder Manschetten verhindern im Brandfall nur, dass die giftigen Rauchgase und das Feuer nicht in den angrenzenden Raum übertreten können. Darüber hinaus kann verhindert werden, dass heiße Luft durch die Durchführung hindurch tritt bzw. durch die Leitungsstränge in den anderen Raum übertragen wird.

Insbesondere bei Wand- und Deckendurchführungen von nicht isolierten Leitungssträngen, insbesondere Rohren oder Leitungen, wie etwa Metallrohren, ist dies nicht ohne zusätzliche Maßnahmen zu realisieren, da die Metallrohre bzw. -leitungen, die Wärme trotz Abschottung der Durchführung aufgrund ihrer guten Wärmeleitfähigkeit durch die Abschottung hindurch auf die andere Wandseite übertragen. Dies führt dazu, dass die das Rohr umgebenden bzw. daran angrenzenden Materialien ebenfalls erhitzt werden, was bei Überschreiten der jeweiligen Entzündungstemperatur trotz Abschottung der Durchführung zu einer Übertragung des Feuers führen kann. Besonders bei dünnen Wänden und Decken, wie etwa bei nachträglich installierten Trockenbauwänden, ist die Wärmeübertragung durch die Wand oder die Decke über Rohrleitungen kritisch, da die Wand- oder Deckendicke und das Material aus dem diese bestehen oft nicht ausreicht, die Wärme von der erhitzten Rohrleitung abzuführen.

Dies kann dadurch verhindert werden, dass zusätzliche Vorkehrungen getroffen werden, die entweder eine übermäßige Erhitzung des Leitungsstranges, z.B. des Rohres bzw. der Leitung, verhindern oder die durch das Rohr- bzw. Leitungsmaterial transportierte Wärme derart abführen, dass eine Wärmeleitung entlang des Leitungsstranges durch die Abschottung hindurch verhindert bzw. minimiert wird, so dass die Temperatur des Rohres bzw. der Leitung auf der feuerabgewandten Seite den Flammpunkt der daran angrenzenden Materialien nicht erreicht.

Die übermäßige Erhitzung kann verhindert werden, indem das Rohr bzw. die Leitung mit einer nichtbrennbaren Isolationsschicht verschalt bzw. ummantelt wird, wie dies beispielsweise in der US 2006/0096207 A1 beschrieben ist. Die US 2006/0096207 A1 beschreibt eine Vorrichtung zum Kühlen einer Rohrleitung, die eine Vielzahl an einzelnen Kühlaggregaten, die mit Wasser oder einem anderen geeigneten Kühlmittel gefüllt sind, aufweist, wobei die Kühlaggregate von einer Manschette umgeben sind, die wiederum mit Lüftungsschlitzen versehen ist.

Nachteilig an dieser Lösung ist, dass für jeden Rohrumfang eine eigene Manschette und ein eigenes Kühlaggregat mit dem entsprechenden Umfang bereit gehalten werden muss. Hierdurch erhöht sich der Arbeits- und Materialaufwand erheblich.

Eine andere Möglichkeit besteht darin, den Leitungsstrang, wie das Rohr bzw. die Leitung, mit einer Beschichtung zu versehen, wie dies beim Stahlbrandschutz üblich ist.

Die Beschichtungen haben etwa den Nachteil, dass sie zum einen teuer, schwierig in der Auftragung und empfindlich gegenüber mechanischer Beanspruchung bzw. Einwirkung sind und über eine eher geringe Wärmeleitfähigkeit verfügen. Darüber hinaus liegt die Aktivierungstemperatur der in der Beschichtung eingesetzten Brandschutzadditive zur Ausbildung einer isolierenden Ascheschicht im Allgemeinen zwischen 250°C bis 300°C was im Allgemeinen oberhalb des kritischen Bereichs von 180K liegt. Die Intumeszenz durch die Brandschutzadditive wird erst bei Überschreiten des kritischen Bereichs ausgelöst.

Es ist daher Aufgabe der Erfindung, ein universelles System bereitzustellen, das einfach in der Handhabung ist, d.h. sich problemlos an die unterschiedlichen Geometrien der zu ummantelnden Leitungsstränge anpassen lässt, einfach an die erforderliche Länge angepasst werden kann, billig in der Herstellung und der Weiterverarbeitung und im Brandfalle unbedenklich für die Umwelt ist und die erforderlichen Anforderungen des Brandschutzes zu erfüllen vermag.

Erfindungsgemäß wird die Aufgabe dadurch gelöst, dass unmittelbar im Anschluss an die Abschottung der Durchführungsöffnung in dem Bauteil der Leitungsstrang bei einer Wanddurchführung beidseitig und bei einer Deckendurchführung oberhalb der Durchführöffnung mit einer Bandage umwickelt wird, die bei erhöhter Temperatur den Leitungsstrang zu kühlen vermag.

Der im Sinne der Erfindung verwendete Begriff *kritische Temperatur* bedeutet eine Temperatur, die um mehr als 180K über Raum- bzw. Umgebungstemperatur liegt. Bei einer Raumtemperatur von 22°C läge die kritische Temperatur bei 202°C. Als *Brandschutzinstallation* wird eine mit Brandschutzmaterial abgeschottete Durchführungsöffnung in einem Bauteil, durch das Rohrleitungen gelegt wurden, verstanden. Abschottung ist dabei, das Verschließen der nach der Installation der Rohrleitung verbleibenden Durchführungsöffnung mit Brandschutzmaterial, wie Schaum oder Mörtel, denen Brandschutzadditive zugesetzt sind, und/oder ein intumeszenzfähiges Schaumformteil in Form eines Mauersteins oder einer Matte oder mit Brandschutzmaterial gefüllte Säcke. Als *Leitungsstrang* wird sowohl eine einzelne Leitung, wie etwa eine Rohrleitung oder Kabelleitung, oder ein Bündel aus zwei oder mehreren Leitungen, wie etwa Rohrleitungen oder Kabelleitungen, verstanden.

Ein erster Gegenstand der Erfindung ist daher eine Bandage zur Verlängerung der Zeitspanne in der ein Leitungsstrang, wie beispielsweise eine Rohrleitung, in einer Brandschutzinstallation unterhalb einer kritischen Temperatur bleibt, umfassend ein Bindemittel und endotherm zersetzbare Füllstoffe. Zweckmäßig wird die Bandage direkt auf dem Leitungsstrang befestigt, d.h. an diesem angebracht.

Das Bindemittel hat die Funktion, die endotherm zersetzbaren Füllstoffe als Schicht auf dem Leitungsstrang zu binden, wobei die Füllstoffe mit dem Bindemittel vermischt werden.

Bevorzugt ist das Bindemittel eine knet- bzw. formbare Masse, beispielsweise ein lufthärtendes Bindemittel, und besonders bevorzugt eine Masse auf Basis von Silikaten, insbesondere wasserlöslichen Silikaten, beispielsweise Wasserglas (SiO₂/M₂O), wie Natrium-, Kalium- oder Lithiumwasserglas (SiO₂/M₂O; M = Na, K, Li). Zweckmäßig ist das Bindemittel eine Masse aus Wasserglas und Wasser, wobei das Bindemittel 30 bis 50 Gew.-% Wasserglas (SiO₂/M₂O) und 70 bis 50 Gew.-% Wasser enthält, bezogen auf das Bindemittel.

Das Bindemittel auf Basis einer Masse aus Wasserglas und Wasser hat den Vorteil, dass es chemisch an Luft trocknet, d.h. die Masse härtet durch Reaktion mit Kohlendioxid aus der Luft unter Bildung eines Glases aus. Es sind keine weiteren Maßnahmen zur Befestigung der Bandage an dem Leitungsstrang erforderlich.

Erfindungsgemäß sind die Füllstoffe endotherm zersetzbar. Insbesondere handelt es sich hierbei um dehydratisierbare Verbindungen. Dies bedeutet, dass die Verbindungen unter Hitze Wasser, meist Kristallwasser abspalten und sich dabei unter Bildung keramikartiger Verbindungen zersetzen. Erwärmt sich ein mit der erfindungsgemäßen Bandage umwickelten Leitungsstrang auf oder über eine Temperatur, die der Zersetzungstemperatur der Füllstoffe entspricht, spalten diese Wasser ab, wodurch dem Leitungsstrang Wärme entzogen und diese gekühlt wird. Das gebildete Wasser verdunstet bei genügend großer Hitze, wobei durch die Verdunstung eine weitere Kühlung des Leitungsstrangs erreicht wird.

Als endotherm zersetzbare Füllstoffe werden vorzugsweise Aluminiumhydroxid, Aluminiumoxidhydrate oder teilhydratisierte Aluminiumhydroxide verwendet. Es kommen aber auch andere, bei der Hitzeeinwirkung wasserabgebende anorganische Hydroxide oder Hydrate in Betracht, z. B. Borsäure und deren teilentwässerte Derivate, ferner CaO·Al₂O₃·10H₂O (Nesquehonit), MgCO₃·3H₂O (Wermlandit), Ca₂Mg₁₄(Al,Fe)₄CO₃(OH)₄₂·29H₂O (Thaumasit), Ca₃Si(OH)₆(SO₄)(CO₃)·12H₂O (Artinit), Mg₂(OH)₂CO₃·H₂O (Ettringit), 3CaO·Al₂O₃·3CaSO₄·32H₂O (Hydromagnesit), Mg₅(OH)₂(C₃)₄·4H₂O (Hydrocalumit), Ca₄Al₂(OH)₁₄·6H₂O (Hydrotalkit), Mg₆Al₂(OH)₁₆CO₃·4H₂O Alumohydrocalcit, CaAl₂(OH)₄(CO₃)₂·3H₂O Scarbroit, Al₁₄(CO₃)₃(OH)₃₆ Hydrogranat, 3 CaO·Al₂O₃·6H₂O Dawsonit, NaAl(OH)CO₃, CaSO₄·2H₂O Gips, wasserhaltige Zeolithe, Vermikulite, Zinkborat, Colemanit, Perlite, Glimmer, Alkalisilikate, Borax, modifizierte Kohlen und Graphite, Kieselsäuren. Besonders bevorzugt sind Aluminiumhydroxid, Aluminiumhydroxidhydrate, Magnesiumhydroxid und Zinkborat, da sie eine Aktivierungstemperatur unterhalb 180°C haben, was bei einer Raumtemperatur von 25°C unterhalb der kritischen Temperatur von etwa 205°C ist.

Der Anteil der Füllstoffe beträgt bevorzugt 40 bis 80 Gew.-%, stärker bevorzugt 60 bis 75 Gew.-%, bezogen auf das Gesamtgewicht der Bandage. Bei einem Anteil von unter 40 Gew.-% kann keine ausreichende Kühlung mehr garantiert werden, bzw. muss die Bandage solche Ausmaße (Breite, Dicke) annehmen, dass deren Verwendung unhandlich und unwirtschaftlich wird. Übersteigt der Anteil 80 Gew.-% ist der Füllstoffanteil in der Bandage, zusammen mit dem Wasserglas, so groß, dass die erhaltene Masse zu trocken ist und nicht mehr vernünftig verarbeitet werden kann.

In einer weiteren Ausführungsform der Erfindung anhält die Bandage ferner weitere Füllstoffe, ausgewählt aus der Gruppe bestehend aus Kreide (CacO₃/MgCO₃), Schichtsilikaten, Talkum, Kaolin, Bentonite und Schwerspat (BaSO₄). Hierdurch kann der Gehalt an den relativ teuren endotherm zersetzbaren Füllstoffen reduziert werden, ohne dass die kühlenden Eigenschaften der Bandage beeinträchtigt werden.

Die weiteren Füllstoffe können in einer Menge bis zu 25 Gew.-%, bezogen auf das Gesamtgewicht der Bandage, enthalten sein.

Zweckmäßig ist das Bindemittel auf einem Träger aufgebracht.

Als Träger kommen alle Materialien in Frage, die hinreichend flexibel sind, damit die Bandage um Leitungsstränge verschiedener Durchmesser umwickelt werden können. Der Träger hat die Funktion, die Masse aus Wasserglas, Füllstoffen und Wasser solange in Form zu halten, bis diese Aufgrund der Trocknung an Luft selbsttragend und formstabil ist. Nachdem nach dem Aushärten der Masse kein Träger mehr erforderlich ist, werden hinsichtlich der thermischen Stabilität keine Anforderungen an das Trägermaterial gestellt.

Bevorzugt ist der Träger ein Gewebe, Gewirk oder Vlies, insbesondere solche aus anorganischem Material, wie Mineralfasern oder Glasfasern.

Die Dicke und die Länge der Bandage sind in Abhängigkeit von der Beschaffenheit des Leitungsstrangs, wie Material (Wärmeleitkoeffizient), Durchmesser, Wandstärke und dergleichen, so gewählt, dass hinreichend Wärme abgeführt werden kann, um die Anforderungen des Brandtests nach ASTM E814 (UL1479) zu erfüllen.

Ein weiterer Gegenstand der Erfindung ist ein Verfahren zur Verlängerung der Zeitspanne in der ein Leitungsstrang, wie beispielsweise eine Rohrleitung, in einer Brandschutzinstallation unterhalb einer kritischen Temperatur bleibt, und damit ein Verfahren zur Erhöhung des T-Rating-Wertes nach ASTM E814 (UL1479) von Rohrleitungen. Erfindungsgemäß wird unmittelbar im Anschluss an die Abschottung einer Durchführungsöffnung in einer Brandschutzinstallation ein Leitungsstrang, wie beispielsweise eine Rohrleitung, bei Wanddurchführungen beidseitig und bei Deckendurchführungen oberhalb der Durchführungsöffnung mit einer oben beschriebenen Bandage umwickelt.

Bevorzugt wird der Leitungsstrang auf so einer Länge, in axialer Richtung des Leitungsstrangs, und mit so einer Dicke, in radialer Richtung des Leitungsstrangs, mit der Bandage umwickelt, dass durch die wärmeentziehende Wirkung der Bandage der Leitungsstrang hinreichen gekühlt wird, um die Anforderungen des Brandtests nach ASTM E814 (UL1479) zu erfüllen. Dabei hängen die Länge und die Dicke von der Beschaffenheit des Leitungsstrangs, wie Material (Wärmeleitkoeffizient), Durchmesser, Wandstärke und dergleichen, ab.

Die Anwendung der erfindungsgemäßen Bandage ist einfach. Ein flüssiges Wasserglas wird mit den endotherm zersetzbaren Füllstoffen und gegebenenfalls mit den weiteren Füllstoffen vermischt und luftdicht, d.h. unter Ausschluss von Kohlendioxid, verpackt. So kann die Brandschutzmasse aus Bindemittel und Füllstoffen über einen längeren Zeitraum gelagert werden. Vor Ort wird nach Bedarf eine entsprechende Menge des Brandschutzmaterials entnommen, gegebenenfalls auf ein Trägermaterial aufgebracht und um einen Leitungsstrangs herumgewickelt. Die Breite, in axialer Richtung des Leitungsstrangs, sowie die Dicke, in radialer Richtung des Leitungsstrangs, richten sich nach dem Material (Wärmeleitkoeffizient λ), dem Umfang und der Dicke (Wandstärke) der Rohrleitung. Dies kann empirisch anhand der Daten für den Leitungsstrang und der Bandage berechnet werden. Nach etwa zwei Tagen ist die Bandage infolge der Aushärtung durch das in der Umgebungsluft enthaltene Kohlendioxid zu einem glasartigen Körper ausgehärtet und hält selbständig an dem Leitungsstrang.

Die Erfindung kann auf alle Leitungsstränge angewandt werden, welche solche einen Wärmeleitkoeffizienten aufweisen, dass die Wärmeableitung über den Rohrabschnitt, der in dem abgeschotteten Bauteildurchbruch liegt, so gering ist, dass die Temperatur des Leitungsstrangs auf der feuerabgewandten Seite des Leitungsstrangs unmittelbar nach dem Bauteildurchbruch so ansteigen kann, dass die Anforderungen des Brandtests nach ASTM E814 (UL1479) nicht erfüllt werden, wenn die Temperatur über einen direkt an dem Leitungsstrang angebrachten Temperaturfühler gemessen wird. Üblicherweise sind dies nicht isolierte Stahl- oder Metallrohre und -leitungen.

Im Folgenden wird die Erfindung anhand von Abbildungen näher beschrieben und erläutert. Es stellen dar:
- Fig. 1:: in Draufsicht eine Brandschutzinstallation aus einem mit Brandschutzmaterial abgeschotteten Mauerdurchbruch mit Belegung durch eine Rohrleitung (ohne Umwickelung);
- Fig. 2:: in Draufsicht eine Brandschutzinstallation aus einem mit Brandschutzmaterial abgeschotteten Mauerdruchbruch mit Belegung durch eine Rohrleitung mit einer erfindungsgemäßen Bandage;
- Fig. 3:: ein Diagramm über die Messung des Temperaturverlaufs an jeweils zwei Messpunkten;
- Fig. 4:: ein Diagramm über die Messung des Temperaturverlaufs an jeweils fünf Messpunkten.

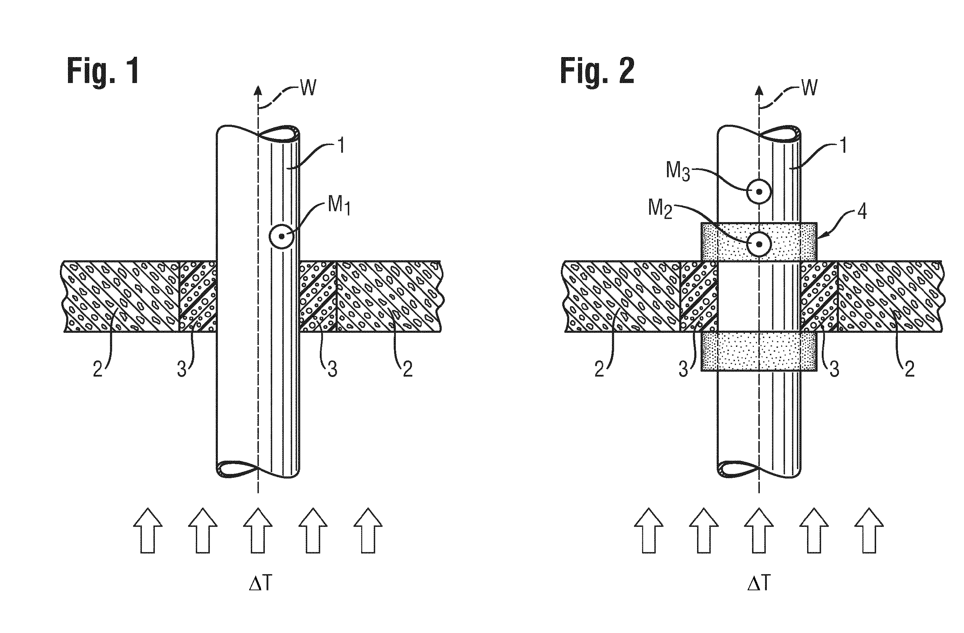

Fig. 1 zeigt eine Brandschutzinstallation mit einer Rohrleitung (1), die durch einen Durchbruch durch eine Mauer (2) führt. In dem gezeigten Beispiel ist die Rohrleitung (1) ein Kupferrohr mit einem Durchmesser von 76 mm. Die Rohrleitung kann aber auch aus jedem anderen Material bestehen, das Wärme gut leitet. Der Mauerdurchbruch ist mit einem Brandschutzmaterial (3) rauchgas- und feuerdicht abgeschottet. Das Brandschutzmaterial kann dabei ein Schaum und/oder ein intumeszenzfähriges Schaumformteil in Form eines Mauersteins oder einer Matte oder mit Brandschutzmaterial gefüllte Säcke sein. Beim Brandtest erfolgt die Beflammung von einer Seite, dargestellt durch die dicken Pfeile. Dementsprechend erfolgt die Wärmeleitung (W) durch das Material der Rohrleitung von der befeuerten Seite in Richtung der feuerabgewandten Seite.

Beim Brandtest erfolgt die Messung der Temperatur direkt nach dem Mauerdurchbruch, wobei ein Temperaturfühler (**M₁**) in einem axialen Abstand von 25 mm von dem Mauerschott direkt auf der Rohrleitung (**1**) angebracht wird.

Fig. 2 zeigt die Brandschutzinstallation aus Fig. 1, bei der die Rohrleitung (**1**) mit einer erfindungsgemäßen Bandage (**4**) umwickelt ist. Die Bandage weist eine Dicke in radialer Richtung der Rohrleitung (**1**) von 12 mm und eine Länge in axialer Richtung der Rohrleitung (**1**) von 125 mm auf. Auch hier erfolgt beim Brandtest die Beflammung von einer Seite; dies entspricht in Fig. 2 ebenfalls von unten her, dargestellt durch die dicken Pfeile. Dementsprechend erfolgt die Wärmeleitung (**W**) innerhalb der Rohrleitung von der befeuerten Seite in Richtung der feuerabgewandten Seite des Mauerdruchbruchs. Die beispielhaft gezeigte Bandage setzt sich aus einem Gemisch aus 25 Gew.-% Bindemittel (flüssiges Wasserglas: SiO₂/Na₂O; Feststoffanteil 33 - 37 %) und 75 Gew.-% Aluminiumtrihydroxid, jeweils bezogen auf das Gemisch, zusammen, wobei das Gemisch mit einem Glasfasergewebe als Träger versehen ist. Das Glasfasergewebe bildet dabei die äußerste Schicht der Bandage, so dass das Gemisch direkt auf der Rohrleitung zum liegen kommt.

Beim Brandtest erfolgt die Messung der Temperatur einmal auf der Bandage in einem axialen Abstand von 25 mm, wobei ein Temperaturfühler (**M₂**) direkt auf der Bandage angebracht wird und einmal in einem axialen Abstand von dem Mauerschott, direkt nach der Bandage (**4**), wobei ein Temperaturfühler (**M₃**) unmittelbar nach der Bandage (**4**) direkt auf der Rohrleitung (**1**) angebracht ist.

Zum Vergleich (nicht in den Figuren gezeigt) wird der Temperaturverlauf während des Brandtests an einem Kupferrohr mit einem Durchmesser von 76 mm, das mit einer 30 mm dicken und 125 mm breiten Mineralwollverschalung (Rockwool® Klimarock, Dicke 30 mm, Dichte 80kg/m³; Deutsche Rockwool Mineralwoll GmbH & Co. KG) umwickelt ist, gemessen. Die Messung der Temperatur über zwei Temperaturfühler (**M₄**) und (**M₅**) erfolgt hier in einem axialen Abstand von 25 mm auf der Verschalung (**M₄**) und einmal in einem axialen Abstand von dem Mauerschott, direkt nach der Verschalung, wobei hier der Temperaturfühler direkt auf der Rohrleitung angebracht ist (**M₅**).

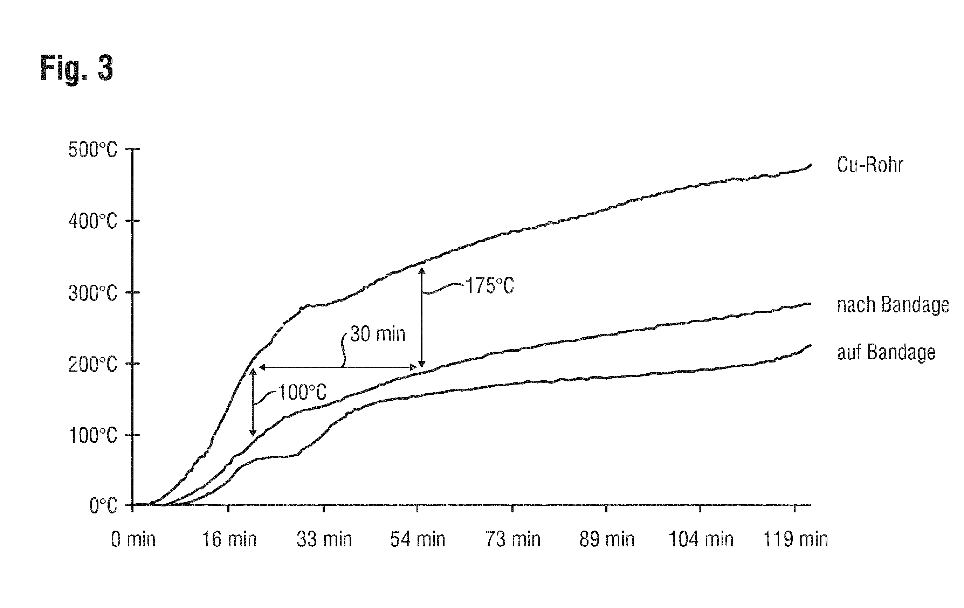

Fig. 3 zeigt den Temperaturverlauf während des Brandtests über eine Dauer von etwa 120 Minuten an den Messpunkten **M₁, M₂** und **M₃,** die wie oben beschrieben und in Fig. 1 und Fig. 2 dargestellt, positioniert sind. Die oberste Kurve entspricht dem Temperaturverlauf für das blanke Kupferrohr an dem Messpunkt **M₁;** die mittlere Kurve dem Temperaturverlauf für das Kupferrohr, welches mit einer erfindungsgemäßen Bandage umwickelt ist, an dem Messpunkt **M₃** und die unterste Kurve dem Temperaturverlauf für das Kupferrohr, welches mit einer erfindungsgemäßen Bandage umwickelt ist, an dem Messpunkt **M₂.**

Wie aus der Kurve aus Fig. 3 ersichtlich ist, hat die Umwickelung mit der erfindungsgemäßen Bandage sowohl einen isolierenden als auch einen kühlenden Effekt, so dass die Zeit, bis die Temperatur an den Messpunkten **M₂** und M₃ auf einen kritischen Wert angestiegen ist, deutlich verlängert wird. Nach etwa 20 Minuten ist die Temperatur an dem Messpunkt **M₃** um 100°C niedriger als an dem Messpunkt **M₁.** Die Temperatur von 200°C wird an dem Messpunkt **M₃** erst etwa 30 Minuten später erreicht.

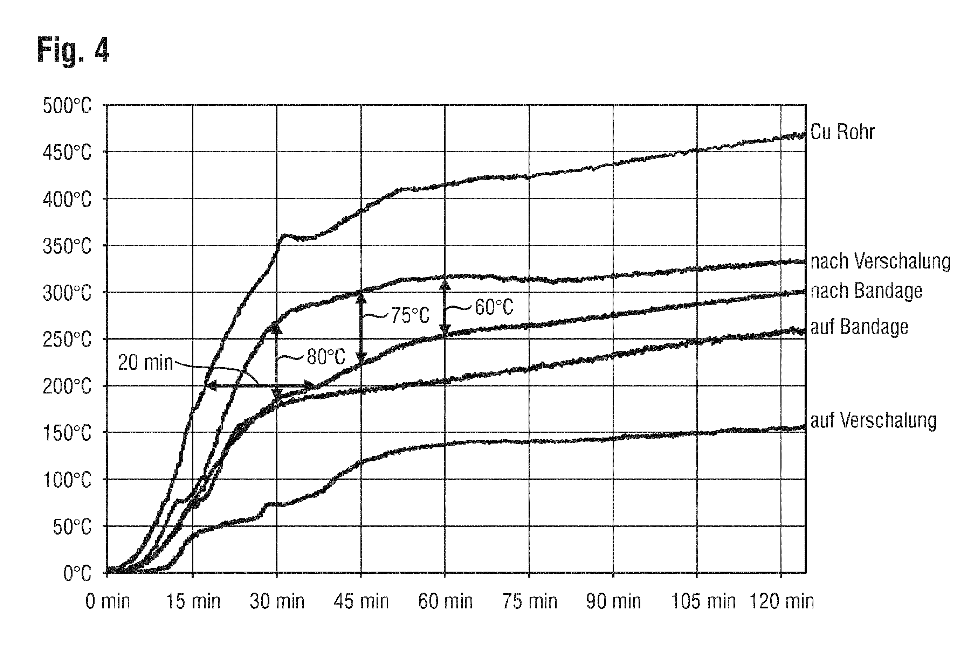

Fig. 4 zeigt den Temperaturverlauf während des Brandtests über eine Dauer von etwa 120 Minuten an den Messpunkten **M₁, M₂, M₃, M₄** und **M₅,** die wie oben beschrieben und in Fig. 1 und Fig. 2 dargestellt, positioniert sind. Die Kurven entsprechen, in absteigender Reihenfolge, d.h. von oben nach unten, dem Temperaturverlauf an den Messpunkten **M₁, M₅, M₃, M₂** und **M₄**.

Wie aus dem Graphen aus Fig. 4 ersichtlich ist, steigt die Temperatur auf den blanken Kupferrohr am schnellsten auf einen kritischen Wert an. Die Umwickelung mit der erfindungsgemäßen Bandage ist vom Isolierungseffekt her gesehen nicht ganz so effektiv wie die Mineralwollverschalung. Dennoch ist eine deutliche Verschiebung einer kritischen Temperatur zu längeren Brandzeiten hin ersichtlich. Der kühlende Effekt der erfindungsgemäßen Bandage lässt sich anhand der Kurven für die Messpunkte **M₃** und **M₅** erkennen, wobei die Temperaturkurve für die erfindungsgemäße Bandage unterhalb der für die Mineralwollverschalung liegt, d.h. ein langsamerer Temperaturanstieg nach der Umwickelung bzw. Bandage zu verzeichnen ist. Auch hieraus ist ersichtlich, dass die erfindungsgemäße Bandage sowohl einen isolierenden als auch einen kühlenden Effekt hat, so dass die Zeit, bis die Temperatur an dem Messpunkt **M₃** verglichen mit **M₅** auf einen kritischen Wert angestiegen ist, deutlich verlängert wird. So beträgt beispielsweise der Unterschied der Temperatur der Rohrleitung nach der Verschalung (**M₅**) und nach der erfindungsgemäßen Bandage (**M₃**) nach 30 Minuten 80°C und nach 60 Minuten 60°C, was deutlich macht, dass durch die Bandage mehr Wärme von der Rohrleitung abgeführt wird.

## Patentansprüche

1. Bandage zur Verlängerung der Zeitspanne in der ein Leitungsstrang in einer Brandschutzinstallation unterhalb einer kritischen Temperatur bleibt, umfassend ein Bindemittel und endotherm zersetzbare Füllstoffe

2. Bandage nach Anspruch 1, **dadurch gekennzeichnet, dass** die Bandage direkt auf dem Leitungsstrang befestigt ist.

3. Bandage nach Anspruch 1 oder 2, **dadurch gekennzeichnet, dass** das Bindemittel eines auf Basis von Wasserglas SiO₂/M₂O ist, wobei M für Na, K und Li steht.

4. Bandage nach Anspruch 3, **dadurch gekennzeichnet, dass** das Bindemittel 30 bis 50 Gew.-% an SiO₂/M₂O enthält, bezogen auf das Bindemittel.

5. Bandage nach Anspruch 4, **dadurch gekennzeichnet, dass** die das Bindemittel ferner 70 bis 50 Gew.-% Wasser enthält, bezogen auf das Bindemittel.

6. Bandage nach einem der vorhergehenden Ansprüche, **dadurch gekennzeichnet, dass** die endotherm zersetzbaren Füllstoffe dehydratisierbare Verbindungen sind.

7. Bandage nach Anspruch 6, **dadurch gekennzeichnet, dass** die dehydratisierbaren Verbindungen aus der Gruppe ausgewählt sind, bestehend aus Aluminiumhydroxid, Aluminiumoxidhydraten, teilhydratisierte Aluminiumhydroxide, Borsäure und deren teilentwässerte Derivate, CaO·Al₂O₃·10H₂O (Nesquehonit), MgCO₃·3H₂O (Wermlandit), Ca₂Mg₁₄(Al,Fe)₄CO₃(OH)₄₂·29H₂O (Thaumasit), Ca₃Si(OH)₆(SO₄)(CO₃)·12H₂O (Artinit), Mg₂(OH)₂CO₃·H₂O (Ettringit), 3CaO·Al₂O₃·3CaSO₄·32H₂O (Hydromagnesit), Mg₅(OH)₂(CO₃)₄·4H₂O (Hydrocalumit), Ca₄Al₂(OH)₁₄·6H₂O (Hydrotalkit), Mg₆Al₂(OH)₁₆CO₃·4H₂O Alumohydrocalcit, CaAl₂(OH)₄(CO₃)₂·3H₂O Scarbroit, Al₁₄(CO₃)₃(OH)₃₆ Hydrogranat, 3CaO·Al₂O₃·6H₂O Dawsonit, NaAl(OH)CO₃, CaSO₄·2H₂O Gips, wasserhaltige Zeolithe, Vermikulite, Zinkborat, Colemanit, Perlite, Glimmer, Alkalisilikate, Borax, modifizierte Kohlen und Graphite, Kieselsäuren.

8. Bandage nach Anspruch 7, **dadurch gekennzeichnet, dass** die endotherm zersetzbaren Füllstoffe unter Aluminiumhydroxid, Aluminiumhydroxidhydrat, Magnesiumhydroxid und Zinkborat ausgewählt sind.

9. Bandage nach einem der vorhergehenden Ansprüche, **dadurch gekennzeichnet, dass** die Bandage 20 bis 60 Gew.-% Bindemittel und 40 bis 80 Gew.-% endotherm zersetzbare Füllstoffe enthält.

10. Bandage nach einem der vorhergehenden Ansprüche, **dadurch gekennzeichnet, dass** die Bandage ferner weitere Füllstoffe enthält, ausgewählt aus der Gruppe bestehend aus Kreide (CacO₃/MgCO₃), Schichtsilikaten, Talkum, Kaolin, Bentonite und Schwerspat (BaSO₄).

11. Bandage nach Anspruch 10, **dadurch gekennzeichnet, dass** die weiteren Füllstoffe in einer Menge bis zu 25 Gew.-%, bezogen auf das Gesamtgewicht der Bandage, enthalten sind.

12. Bandage nach einem der vorhergehenden Ansprüche, **dadurch gekennzeichnet, dass** die Masse aus Bindemittel, endotherm zersetzbaren Füllstoffen und gegebenenfalls weiteren Füllstoffen auf einem Träger aufgebracht ist.

13. Bandage nach Anspruch 12, **dadurch gekennzeichnet, dass** der Träger ein Gewebe, Gewirk oder Vlies ist.

14. Bandage nach Anspruch 13, **dadurch gekennzeichnet, dass** der Träger aus anorganischen Material besteht.

15. Verfahren zur Verlängerung der Zeitspanne in der ein Leitungsstrang in einer Brandschutzinstallation unterhalb einer kritischen Temperatur bleibt, bei dem unmittelbar angrenzend an die Abschottung einer Durchführungsöffnung in einer Brandschutzinstallation ein Leitungsstrang einseitig oder beidseitig mit einer Bandage nach einem der Ansprüche 1 bis 14 umwickelt wird.

16. Verfahren nach Anspruch 15, **dadurch gekennzeichnet, dass** der Leitungsstrang auf so einer Länge, in axialer Richtung des Leitungsstrangs, und mit so einer Dicke, in radialer Richtung des Leitungsstrangs, mit der Bandage umwickelt wird, dass der Leitungsstrang hinreichend gekühlt werden kann, um die Zeitspanne in der der Leitungsstrang in einer Brandschutzinstallation unterhalb einer kritischen Temperatur bleibt, zu verlängern.
